(19) **Europäisches Patentamt / European Patent Office / Office européen des brevets**

(11) **EP 3 896 398 B1**

(12) **FASCICULE DE BREVET EUROPEEN**

(45) Date de publication et mention de la délivrance du brevet:
**10.05.2023 Bulletin 2023/19**

(21) Numéro de dépôt: **21167785.1**

(22) Date de dépôt: **12.04.2021**

(51) Classification Internationale des Brevets (IPC):
**G01C 25/00** *(2006.01)* **G01C 21/16** *(2006.01)*

(52) Classification Coopérative des Brevets (CPC):
**G01C 25/00; G01C 21/165; G01C 21/1654**

(54) **PROCÉDÉ D'IDENTIFICATION D'UNE PHASE STATIQUE D'UN VÉHICULE**

**VERFAHREN ZUR IDENTIFIZIERUNG EINER STATISCHEN PHASE EINES FAHRZEUGS**

**METHOD FOR IDENTIFYING A STATIC PHASE OF A VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2020 FR 2003734**

(43) Date de publication de la demande:
**20.10.2021 Bulletin 2021/42**

(73) Titulaire: **Commissariat à l'énergie atomique et aux énergies alternatives
75015 Paris (FR)**

(72) Inventeur: **VILLIEN, Christophe
38054 GRENOBLE Cedex 09 (FR)**

(74) Mandataire: **INNOV-GROUP
310, avenue Berthelot
69372 Lyon Cedex 08 (FR)**

(56) Documents cités:
**EP-A2- 0 870 175 US-A1- 2008 234 933**

Processed by Luminess, 75001 PARIS (FR)

**Description**

L'invention concerne un procédé d'identification d'une phase statique d'un véhicule lors de laquelle le véhicule est immobile dans un repère solidaire de la terre. L'invention concerne également un support d'enregistrement d'informations, un module d'identification d'une phase statique et un système de localisation pour la mise en oeuvre de ce procédé.

Une phase statique d'un véhicule est une phase pendant laquelle le véhicule est immobile par rapport à la surface de la terre.

La détermination d'une phase statique d'un véhicule est importante car, lors d'une phase statique, les mesures de certains capteurs du véhicule permettent d'initialiser un certain nombre de paramètres du véhicule qui ne peuvent être correctement initialisés que lorsque le véhicule est immobile.

Par exemple, la demande US5991692A ou EP0870175 décrit un procédé connu d'identification d'une phase statique d'un véhicule. Dans cette demande, une phase statique du véhicule est identifiée en comparant les mesures d'un accéléromètre et d'un gyromètre embarqués dans le véhicule à des seuils prédéterminés. La vitesse et la position du véhicule, obtenues à partir des mesures d'une unité de géolocalisation par satellite, ne sont pas utilisées. En effet, ces mesures ne sont pas toujours disponibles. C'est par exemple le cas si le véhicule se trouve dans un environnement qui empêche l'unité de géolocalisation par satellite de recevoir des signaux satellitaires. De façon similaire la demande US2008234933 divulgue de systématiquement commencer par détecter une phase statique à partir des mesures d'un accéléromètre et d'un gyromètre puis, dans certains cas, de confirmer cette détection à partir des mesures de l'unité de géolocalisation.

L'invention vise à améliorer la fiabilité des procédés connus d'identification d'une phase statique d'un véhicule. A cet effet, elle a pour objet un procédé d'identification d'une phase statique d'un véhicule conforme à la revendication 1.

L'invention a également pour objet un support d'enregistrement d'informations, lisible par un microprocesseur, comportant des instructions pour la réalisation du procédé d'identification ci-dessus, lorsque ces instructions sont exécutées par un microprocesseur.

L'invention a également pour objet un module d'identification d'une phase statique d'un véhicule pour la mise en oeuvre du procédé ci-dessus.

Enfin, l'invention a également pour objet un système de localisation comportant le module de détection ci-dessus.

L'invention sera mieux comprise à la lecture de la description qui va suivre, donnée uniquement à titre d'exemple non limitatif et faite en se référant aux dessins sur lesquels :

- la figure 1 est une illustration schématique d'un système de localisation d'un véhicule ;
- les figures 2 et 3 sont des organigrammes, respectivement, d'un premier et d'un second procédés d'identification d'une phase statique d'un véhicule à l'aide du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail. Par exemple, une présentation de l'état de l'art en la matière peut être trouvée dans la thèse suivante : S. Godha, "Performance Evaluation of Low Cost MEMS-Based IMU Integrated With GPS for Land Vehicle Navigation Application", PhD report, 2006. Par la suite, cette thèse est désignée par l'expression "Godha2006".

Dans cette description, des exemples détaillés de modes de réalisation sont d'abord décrits dans le chapitre I en référence aux figures. Ensuite, dans le chapitre II suivant, des variantes de ces modes de réalisation sont présentées. Enfin, les avantages des différents modes de réalisation sont présentés dans un chapitre III.

Chapitre I : Exemples de modes de réalisation

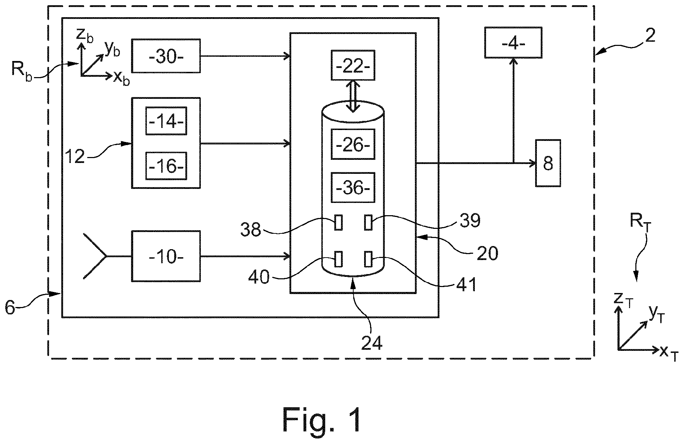

La figure 1 représente un véhicule automobile 2 capable de se déplacer sur la terre. Le véhicule 2 est équipé de moyens 4 de propulsion. Dans le cas d'un véhicule automobile, les moyens 4 sont généralement un moteur thermique ou un moteur hybride ou un moteur électrique. Lorsque le véhicule 2 est à l'arrêt, celui-ci est soumis à des vibrations et notamment aux vibrations des moyens 4 de propulsion lorsque ceux-ci ne sont pas éteints.

Le véhicule 2 est équipé d'un système 6 de localisation de ce véhicule. Ce système 6 est apte à déterminer de la position et de l'orientation du véhicule 2 dans un repère terrestre $R_T$. Le repère terrestre $R_T$ est fixé sans aucun degré de liberté à la terre. Le repère $R_T$ comporte trois axes typiquement orthogonaux entre eux. Un repère mobile $R_b$ est également fixé sans aucun degré de liberté au véhicule 2. Ce repère $R_b$ comporte trois axes orthogonaux entre eux notés respectivement $x_b$, $y_b$ et $z_b$. Classiquement, lorsque le véhicule 2 se déplace horizontalement, les axes $x_b$ et $y_b$ sont dans un plan horizontal et l'axe $z_b$ est vertical.

Ici, la position du véhicule 2 dans le repère $R_T$ est exprimée par la latitude L, la longitude $\lambda$ et l'altitude h de l'origine du repère $R_b$.

L'orientation du véhicule 2 est exprimée par l'angle $\psi$ de lacet (« yaw angle » en anglais), l'angle $\theta$ de tangage (« pitch angle » en anglais) et l'angle $\Phi$ de roulis (« roll angle » en anglais) du repère $R_b$ par rapport au repère $R_T$.

La position et l'orientation déterminées par le système 6 sont généralement transmises à un poste 8 de pilotage pour guider ou assister au guidage du véhicule 2 vers une destination prédéfinie. Le poste 8 peut être un poste de pilotage manuel et/ou automatique. Dans le cas d'un poste de pilotage manuel, la position et l'orientation déterminées sont transmises à une interface homme-machine pour assister un être humain dans le pilotage des moyens 4 de propulsion. Dans le cas d'un poste de pilotage automatique, la position et l'orientation déterminées sont automatiquement converties en commandes de pilotage des moyens 4 de propulsion, puis transmises automatiquement à ces moyens 4 de propulsion.

Le système 6 comporte une unité 10 de géolocalisation par satellite et une unité 12 de navigation inertielle. L'unité 10 est connue sous l'acronyme GNSS (« Global Navigation Satellite System »). L'unité 10 est, par exemple, une unité de géolocalisation mono-antenne et non pas une unité de géolocalisation multi-antenne. L'unité 10 est donc incapable de mesurer l'orientation absolue du véhicule 2 dans le repère $R_T$ à partir des signaux satellitaires émis par les satellites.

L'unité 12 est connue sous l'acronyme IMU (« Inertial Measurement Unit »). L'unité 12 comporte notamment un accéléromètre triaxe 14 et un gyromètre triaxe 16. Grâce à ces capteurs, l'unité 12 est capable de mesurer la variation de l'orientation du véhicule 2. Par contre, l'unité 12 est incapable elle aussi de mesurer directement l'orientation du véhicule 2 dans le repère $R_T$.

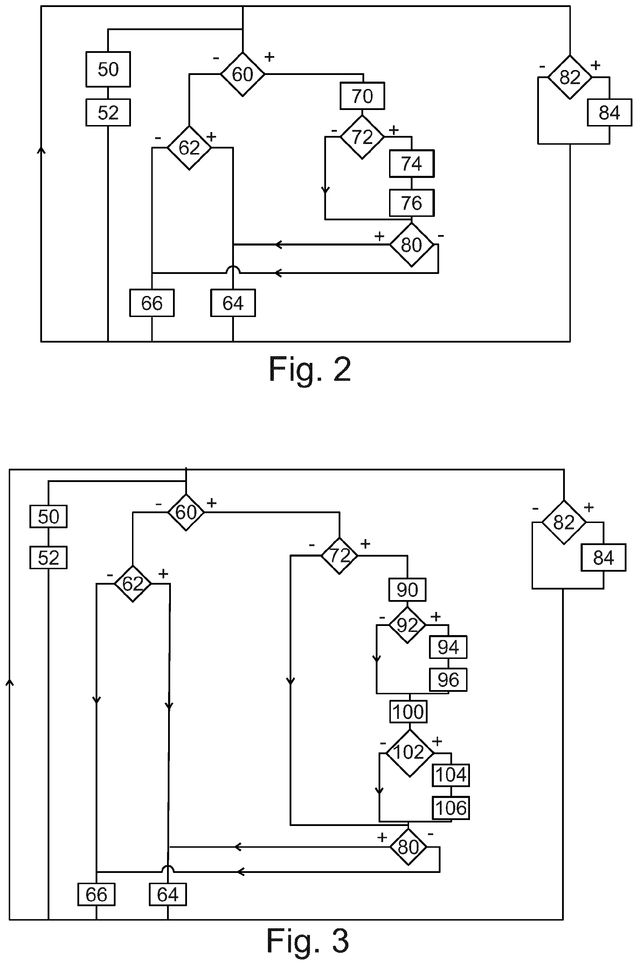

Pour déterminer la position et l'orientation du véhicule 2 à partir des mesures des unités 10 et 12, le système 6 comporte un calculateur électronique programmable 20. Ce calculateur 20 est apte à acquérir les mesures des unités 10 et 12 et, à partir de ces mesures, à déterminer la position et l'orientation du véhicule 2 dans le repère $R_T$. Le calculateur 20 comporte un microprocesseur 22 et une mémoire 24 comportant les instructions et les données nécessaires à la mise en oeuvre du procédé décrit en référence à la figure 2 ou 3.

Plus précisément, la mémoire 24 comporte les instructions d'un module 26. Le module 26 exécute notamment un algorithme de fusion apte à établir, à partir d'une précédente estimation de la position et de l'orientation du véhicule 2 et de nouvelles mesures des unités 10 et 12 acquises depuis cette précédente estimation, une nouvelle estimation de la position et de l'orientation du véhicule 2. L'algorithme de fusion établit également pour chaque nouvelle estimation de la position et de l'orientation du véhicule 2, une marge d'erreur sur cette estimation.

Les algorithmes de fusion sont bien connus de l'homme du métier. Par exemple, le lecteur intéressé peut encore une fois se référer à la thèse Godha2006 précédemment citée. L'algorithme de fusion réalise la fusion des mesures des unités 10 et 12 pour obtenir des estimations de la position et de l'orientation du véhicule 2 plus précises que si, par exemple, seules les mesures de l'unité 10 étaient utilisées pour déterminer la position et seules les mesures de l'unité 12 étaient utilisées pour déterminer l'orientation du véhicule 2. Autrement dit, pour établir chacune des estimations de la position et de l'orientation du véhicule 2, le module 26 utilise les mesures à la fois de l'unité 10 et de l'unité 12. Par exemple, cet algorithme de fusion implémente un ou plusieurs filtres de Kalman.

Il est nécessaire d'initialiser l'algorithme de fusion avec des estimations initiales de la position et de l'orientation du véhicule 2. Ces estimations initiales sont réalisées, par exemple, comme décrit dans le livre : Paul D. Groves : "Principles of GNSS, Inertial, and Multisensor Integrated Navigation Systems", Second Edition (GNSS Technology and Applications), Artech House, 2008. Ici, l'estimation initiale de l'angle de lacet est obtenue à partir des mesures d'un magnétomètre. A cet effet, le système 6 comporte donc en plus un magnétomètre 30 raccordé au calculateur 20.

Le magnétomètre 30 est un magnétomètre triaxe, c'est-à-dire qu'il comporte trois axes de mesure non colinéaires, fixes dans le repère $R_b$. Ici, ces trois axes de mesure sont parallèles, respectivement, aux trois axes $x_b$, $y_b$ et $z_b$ du repère $R_b$.

Au cours de ces déplacements, le véhicule 2 peut être amené à s'arrêter. Il est alors immobile dans le repère $R_T$. La phase statique est l'intervalle de temps pendant lequel le véhicule 2 reste immobile. Les phases statiques sont, par exemple, mises à profit pour calibrer et initialiser des paramètres du véhicule 2. Par exemple, le calculateur 6 met ici en oeuvre le processus de calibration connu sous l'acronyme ZVU (Zero Velocity Uptdates) et/ou le processus de calibration connu sous l'acronyme ZARU (Zero Angular Rate Updates).

Pour identifier les phases statiques, la mémoire 24 comporte les instructions d'un module 36 apte à identifier ces phases statiques lorsque ces instructions sont exécutées par le microprocesseur 22. A cet effet, la mémoire 24 comporte, en particulier, quatre jeux 38 à 41 de conditions. Chaque jeu de conditions peut comporter une ou plusieurs conditions à vérifier. Dans ce mode de réalisation, un jeu de conditions est considéré comme étant satisfait si chacune des conditions de ce jeu est vérifiée, c'est-à-dire que chacune de ces conditions est vraie. A l'inverse, si l'une des conditions d'un jeu de conditions est fausse, alors le jeu de conditions n'est pas satisfait. Des exemples de ces jeux 38 à 41 sont décrits plus en détail en référence aux figures 2 et 3.

Le fonctionnement du système 6 va maintenant être décrit en référence au procédé de la figure 2.

Lors d'une étape 50, le calculateur 20 acquiert les mesures de l'unité 10, de l'accéléromètre 14, du gyromètre 16 et du magnétomètre 30. Plus précisément, lors de cette étape 50, le calculateur 20 acquiert à un instant k les mesures suivantes :

- la vitesse instantanée $v_i(k)$ du véhicule obtenue seulement à partir des mesures de l'unité 10,
- la position instantanée $P_i(k)$ du véhicule 2 obtenue seulement à partir des mesures de l'unité 10,
- l'accélération instantanée $a_i(k)$ du véhicule 2 obtenue seulement à partir des mesures de l'accéléromètre 14,
- la vitesse angulaire $w_i(k)$ du véhicule 2 obtenue seulement à partir des mesures du gyromètre 16,
- le champ magnétique terrestre instantané $B_i(k)$ dans lequel se trouve le véhicule 2 obtenue seulement à partir des mesures du magnétomètre 30, et
- le nombre $n_{sv}(k)$ de satellites visibles par l'unité 10, c'est-à-dire le nombre de satellites qui transmettent à l'unité 10 des signaux satellitaires exploités pour obtenir les mesures $P_i(k)$ et $v_i(k)$.

Typiquement, la vitesse $v_i(k)$ et la position $P_i(k)$ se présente chacun sous la forme d'un vecteur comportant trois coordonnées le long, respectivement, des axes $x_T$, $y_T$ et $z_T$ du repère $R_T$. Ici, les indices x, y et z sont utilisés pour désigner les coordonnées le long, respectivement, des axes $x_T$, $y_T$ et $z_T$ d'une mesure acquise. Ainsi par exemple, le symbole $v_{ix}(k)$ désigne la coordonnée le long de l'axe $x_T$ de la mesure $v_i(k)$.

L'accélération $a_i(k)$, la vitesse angulaire $w_i(k)$ et le champ magnétique $B_i(k)$ se présentent aussi chacun sous la forme d'un vecteur comportant trois coordonnées le long des axes de mesures du capteur qui a réalisé ces mesures. Ici, ces axes de mesure sont parallèles aux axes $x_b$, $y_b$ et $z_b$ du repère $R_b$.

Par la suite, on désigne par le symbole « G » l'une quelconque des grandeurs physiques mesurées lors de l'étape 50. Ainsi, la grandeur physique G appartient au groupe constitué :

- de la vitesse du véhicule 2 obtenue à partir des mesures de l'unité 10,
- de la position du véhicule 2 obtenue à partir des mesures de l'unité 10,
- de l'accélération du véhicule 2 mesurée par l'accéléromètre 14,
- de la vitesse angulaire du véhicule 2 mesurée par le gyromètre 16, et
- du champ magnétique mesuré par le magnétomètre 30.

Lors d'une étape 52, le calculateur 20 calcule, les valeurs $I_G(k)$ à l'instant k de plusieurs indicateurs $I_G$. Dans ce mode de réalisation, chaque indicateur $I_G$ est représentatif d'un moment statistique respectif des mesures de la grandeur physique G à l'instant k. Chaque valeur $I_G(k)$ est calculée à partir des mesures de la grandeur physique G réalisée pendant une fenêtre glissante W. La fenêtre W est une fenêtre glissante qui s'étend depuis l'instant courant k jusqu'à un instant précédent $k - N_{WG}$, où $N_{WG}$ est un nombre entier de périodes $T_e$ d'échantillonnage qui sépare l'instant k de l'instant $k - N_{WG}$. Dans ce premier mode de réalisation, le nombre $N_{WG}$ est le même pour toutes les grandeurs physiques G. De plus, ici, le nombre $N_{WG}$ est choisi pour que la durée $D_G$ de la fenêtre W soit inférieure ou égale à cinq secondes ou trois secondes et supérieure ou égale à une seconde. Par exemple, le nombre $N_{WG}$ est choisi pour que la durée $D_G$ de cette fenêtre W soit égale à deux secondes.

A titre d'illustration, par la suite, pour chacune des grandeurs physiques G, seuls les deux indicateurs $I_G$ suivants sont utilisés et calculés par le calculateur 20 :

- un indicateur, noté $\mu_G$, qui est égal au moment ordinaire d'ordre un, c'est-à-dire à l'espérance ou à la moyenne des mesures de la grandeur physique G réalisées pendant la fenêtre W,
- un indicateur, noté $\sigma_G$, qui est égal au moment centré d'ordre deux, c'est-à-dire l'écart-type des mesures de la grandeur physique G réalisées pendant la fenêtre W.

Les étapes 50 et 52 sont exécutées à chaque instant k. Deux instants k immédiatement consécutifs sont séparés l'un de l'autre par la période d'échantillonnage $T_e$. Par exemple, ici, la fréquence d'échantillonnage est de 200 Hz. Dans ce cas, le nombre $N_{WG}$ est égal à 400. Par la suite, on note 1, 2, 3, ... k-2, k-1, k la suite des instants jusqu'à l'instant courant k. Ainsi, l'instant k-1 est un instant qui précède immédiatement l'instant k.

En parallèle et après que les valeurs $I_G(k)$ aient été calculées pour chacune des grandeurs physiques G, lors d'une étape 60, le module 36 vérifie si la qualité des signaux satellitaires reçus par l'unité 10 est considérée comme bonne. La qualité des signaux satellitaires est considérée comme bonne si le jeu 38 de conditions est satisfait. Dans ce mode de réalisation, le jeu 38 comporte seulement les deux conditions suivantes :

- condition (38.1) : $\sigma_v(k) < S_{38.1}$, et
- condition (38.2) : $n_{sv}(k) > S_{38.2}$,

où:

- $\sigma_v(k)$ est l'indicateur représentatif de l'écart-type des mesures $v_i(k)$ de la vitesse réalisée par l'unité 10, et
- $S_{38.1}$ et $S_{38.2}$ sont des seuils prédéterminés constants.

L'écart-type $\sigma_v(k)$ sur la mesure $v_i(k)$ est par exemple fourni par l'unité 10 en même temps que chaque vitesse $v_i(k)$. Ainsi, l'écart-type $\sigma_v(k)$ est acquis par le calculateur 20 et non pas calculé pendant l'étape 52.

Par exemple, le seuil $S_{38.1}$ est inférieur à 0,5 m/s ou 0,1 m/s.

Typiquement, le seuil $S_{38.2}$ est une constante supérieure ou égale à trois ou quatre. Toutefois, d'autres valeurs sont possibles. Par exemple, le seuil $S_{38.2}$ peut aussi être choisi égal à un ou deux car la vitesse $v_i(k)$ peut rester bonne pendant un certain temps même si le nombre $n_{sv}(k)$ est inférieur à trois car cette vitesse $v_i(k)$ est généralement obtenue à partir des mesures de l'unité 10 en utilisant un filtre de Kalman. Ceci permet de compenser, au moins temporairement, l'absence de réception de signaux satellitaires de la part d'un ou plusieurs satellites.

Si lors de l'étape 60, le jeu 38 de conditions n'est pas satisfait, alors le procédé se poursuit par une étape 62 de détection d'une phase statique du véhicule 2 sans utiliser les mesures de l'unité 10.

Lors de l'étape 62, le module 36 vérifie si le jeu 39 de conditions est satisfait. Dans l'affirmative, il procède alors à une étape 64 lors de laquelle le module 36 signale une phase statique du véhicule. Par exemple, pour cela, le module 36 affecte la valeur "1" à une variable StaticFlag.

Si le jeu 39 de conditions n'est pas satisfait, le module 36 procède alors à une étape 66 lors de laquelle il signale l'absence d'une phase statique, c'est-à-dire le déplacement du véhicule 2. Pour cela, le module 36 affecte la valeur "0" à la variable StaticFlag.

Le jeu 39 est dépourvu de conditions qui dépendent des mesures de l'unité 10. Ici, le jeu 39 comporte seulement des conditions qui dépendent des mesures de l'accéléromètre 14, du gyromètre 16 et du magnétomètre 30. De plus, pour simplifier les procédés des figures 2 et 3, les mesures du magnétomètre 30 ne sont pas utilisées pour identifier une phase statique du véhicule.

Le jeu 39 de conditions comporte seulement les trois conditions suivantes :

- condition (39.1) : $\sigma_a(k) < S_{39.1}$,
- condition (39.2) : $\sigma_w(k) < S_{39.2}$, et
- condition (39.3) : $\mu_w(k) < S_{39.3}$,

où :

- $\sigma_a(k)$ est la valeur, à l'instant k, de l'indicateur $\sigma_a$ représentatif de l'écart-type des mesures de l'accélération du véhicule 2 réalisées par l'accéléromètre 14,
- $\sigma_w(k)$ est la valeur, à l'instant k, de l'indicateur $\sigma_w$ représentatif de l'écart-type des mesures de la vitesse angulaire réalisées par le gyromètre 16,
- $\mu_w(k)$ est la valeur, à l'instant k, de l'indicateur $\mu_w$ représentatif de la moyenne des mesures de la vitesse angulaire réalisées par le gyromètre 16, et
- $S_{39.1}$, $S_{39.2}$ et $S_{39.3}$ sont des seuils prédéterminés comme décrit plus loin.

Les indicateurs $\sigma_a(k)$, $\sigma_w(k)$ et $\mu_w(k)$ sont ceux calculés lors de l'étape 52.

Ici, le jeu 39 ne comporte aucune condition qui est fonction de l'indicateur $\mu_a$, c'est-à-dire d'un indicateur représentatif de la moyenne des mesures de l'accélération réalisées par l'accéléromètre 14.

Dans les modes de réalisation des figures 2 et 3, la valeur $I_G(k)$ d'un indicateur $I_G$ est considérée comme étant inférieure à un seuil $S_G$ si la valeur absolue de chacune de ses trois coordonnées $I_{Gx}$, $I_{Gy}$ et $I_{Gz}$ est inférieure à ce seuil $S_G$.

Si lors de l'étape 60, le jeu 38 de conditions est satisfait, alors le procédé se poursuit par une étape 70 d'incrémentation de seuils $S_{40.1}$ et $S_{40.2}$. Les seuils $S_{40.1}$ et $S_{40.2}$ sont des seuils utilisés dans le jeu 40 de conditions.

Les seuils $S_{40.1}$ et $S_{40.2}$ sont incrémentés en fonction d'une durée $D_l$ qui sépare l'instant courant k du dernier instant où une étape de calibration des seuils du jeu 39 a été exécutée. Ici, les seuils $S_{40.1}$ et $S_{40.2}$ sont incrémentés de façon proportionnelle à cette durée $D_l$ Par exemple, pour cela, les seuils $S_{40.1}$ et $S_{40.2}$ sont incrémentés en utilisant les relations suivantes :

-

$$S_{40.1} = Min[(1 + F_{40.1} \times D_l) \times S_{40.1\text{-last}} \; ; \; S_{41.1}],$$

-

$$S_{40.2} = Min[(1 + F_{40.2} \times D_l) \times S_{40.2\text{-last}} \; ; \; S_{41.2}]$$

où :

- $F_{40.1}$ et $F_{40.2}$ sont des constantes positives,
- $S_{40.1\text{-last}}$ et $S_{40.2\text{-last}}$ sont les valeurs, respectivement, des seuils $S_{40.1}$ et $S_{40.2}$ obtenues à l'issue de la précédente exécution d'une étape 74 décrite plus loin
- Min[... ; ...] est la fonction qui retourne le plus petit des termes compris entre crochets,
- le symbole "x" désigne l'opération de multiplication, et
- $S_{41.1}$ et $S_{41.2}$ sont des seuils utilisés dans le jeu 41 de conditions.

Les constantes $F_{40.1}$ et $F_{40.2}$ sont choisies petites pour que les seuils $S_{40.1}$ et $S_{40.2}$ n'augmentent pas trop rapidement. Par exemple, pour cela, les constantes $F_{40.1}$ et $F_{40.2}$ sont choisies entre 1/10 et 1/36000 Ici, les constantes $F_{40.1}$ et $F_{40.2}$ sont égales à 1/3600.

Ensuite, lors d'une étape 72, le module 36 vérifie si le jeu 40 de conditions est satisfait. Si le jeu 40 de conditions est satisfait, le module 36 procède alors à l'exécution d'une étape 74 de calibration des seuils du jeu 39. Dans le cas contraire, l'étape 74 n'est pas exécutée.

Dans ce mode de réalisation, le jeu 40 comporte seulement les conditions suivantes :

- condition (40.1) : $\mu_v(k) < S_{40.1}$, et
- condition (40.2) : $\sigma_v(k) < S_{40.2}$,

où :

- $\mu_v(k)$ est la valeur, à l'instant k, de l'indicateur $\mu_v$ représentatif de la moyenne des mesures $v_i(k)$ de la vitesse du véhicule 2,
- $\sigma_v(k)$ est la valeur, à l'instant k, de l'indicateur $\sigma_v$ représentatif de l'écart-type des mesures $v_i(k)$ de la vitesse du véhicule 2,
- $S_{40.1}$ et $S_{40.2}$ sont les seuils incrémentés lors de l'étape 70.

Les seuils $S_{40.1}$ et $S_{40.2}$ sont suffisamment petits pour que le jeu 40 de conditions soit satisfait uniquement lorsqu'une phase statique du véhicule 2 est détectée. A cet effet, ici, les seuils $S_{40.1}$ et $S_{40.2}$ sont inférieurs, respectivement, aux seuils $S_{41.2}$ et $S_{41.1}$ du jeu 41 de conditions.

Lors de l'étape 74, les seuils $S_{39.1}$ à $S_{39.3}$ du jeu 39 sont calibrés en fonction des caractéristiques du bruit sur les mesures de l'accéléromètre 14 et du gyromètre 16 réalisées pendant la phase statique du véhicule 2. A cet effet, les seuils $S_{39.1}$ à $S_{39.3}$ sont mis à jour à l'aide des relations suivantes lors de l'étape 74 :

$$S_{39.1} = \sigma_a(k) \text{ x } F_{39.1},$$

$$S_{39.2} = \sigma_w(k) \text{ x } F_{39.2},$$

et

$$S_{39.3} = \left| \mu_w(k) \right| \text{ x } F_{39.3},$$

où $F_{39.1}$ à $F_{39.3}$ sont des constantes supérieures à un et le symbole |...| désigne la fonction valeur absolue.

Les constantes $F_{39.1}$ à $F_{39.3}$ sont utilisées pour conserver une marge d'erreur suffisante par rapport aux valeurs minimales des indicateurs $\sigma_a$, $\sigma_w$ et $\mu_w$ observées lors d'une phase statique du véhicule 2. Typiquement, les constantes $F_{39.1}$ à $F_{39.3}$ sont supérieures à 1,3 ou 1,5 et, généralement, inférieures à dix, cinq ou trois. Ici, les constantes $F_{39.1}$ à $F_{39.3}$ sont toutes prises égales à deux.

En absence de bruit externe aux capteurs, pendant la phase statique du véhicule 2, les valeurs des indicateurs $\sigma_a$, $\sigma_w$ et $\mu_w$ devraient toutes être égales aux bruits naturels des capteurs. Par "bruit naturel du capteur", on désigne le bruit observé sur la mesure d'un capteur en absence de toute perturbation externe. Le bruit naturel est causé par les composants du capteur. Par "bruit externe", on désigne au contraire le bruit causé par des perturbations externes au capteur. Typiquement, ici, le bruit externe est causés par les vibrations du moteur du véhicule 2. Ainsi, pendant une phase statique du véhicule 2, les valeurs $\sigma_a(k)$, $\sigma_w(k)$ et $\mu_w(k)$ sont représentatives des caractéristiques du bruit naturel et, éventuellement, d'un reliquat de bruit externe qui existe même pendant la phase statique, qui affectent les mesures de l'accéléromètre 14 et du gyromètre 16. Ainsi, les relations ci-dessus permettent d'ajuster les seuils $S_{39.1}$ à $S_{39.3}$ en fonction du bruit naturel et de l'éventuel reliquat de bruit externe mesurés et observés sur les mesures de l'accéléromètre 14 et du gyromètre 16.

Dès lors, la mise à jour des seuils $S_{39.1}$ à $S_{39.3}$ pendant une phase statique du véhicule 2 détectée à partir des mesures de l'unité 10 permet :

1) de limiter le risque que ces seuils soient calibrés alors que le véhicule 2 se déplace, et
2) de régler automatiquement les valeurs de ces seuils en fonction des caractéristiques du bruit naturel et de l'éventuel reliquat du bruit externe mesurés et donc d'obtenir un réglage précis de ces seuils qui accroît la fiabilité de la détection d'une phase statique lors de la prochaine exécution de l'étape 62.

Augmenter la fiabilité de la détection d'une phase statique consiste :

- à limiter le nombre de fois où une phase statique est signalée alors que le véhicule 2 se déplace encore, et
- à limiter le nombre de fois où l'absence d'une phase statique est signalée alors que le véhicule 2 est immobile.

Ensuite, lors d'une étape 76, les seuils du jeu 40 sont décrémentés. Pour cela, ici, les seuils $S_{40.1}$ et $S_{40.2}$ sont décrémentés à l'aide des relations suivantes : $S_{40.1} = \mu_v(k)$ et $S_{40.2} = \sigma_v(k)$, où les valeurs $\mu_v(k)$ et $\sigma_v(k)$ sont les mêmes que celles utilisées lors de l'étape 72.

Si l'étape 76 est exécutée, c'est que le jeu 40 est satisfait et donc que les valeurs $\mu_v(k)$ et $\sigma_v(k)$ sont inférieures, lors de l'exécution de l'étape 72, aux seuils, respectivement, $S_{40.1}$ et $S_{40.2}$. Ainsi, les deux relations ci-dessus conduisent systématiquement à diminuer les valeurs des seuils $S_{40.1}$ et $S_{40.2}$ lorsqu'elles sont exécutées. Dans ces conditions, les seuils $S_{40.1}$ et $S_{40.2}$ convergent vers des valeurs minimales qui sont atteintes lorsque les indicateurs $\mu_v$ et $\sigma_v$ prennent leurs valeurs minimales pendant la phase statique. Cela permet de limiter le nombre de fois où l'étape 74 est exécutée pendant une phase statique. Cela permet aussi d'exécuter l'étape 74 uniquement lorsque l'immobilité du véhicule 2 est encore meilleure que lors des précédentes exécutions de l'étape 74. Par conséquent, l'étape 74 est exécutée uniquement lorsque la situation actuelle du véhicule permet d'obtenir un réglage des seuils du jeu 39 meilleur que le précédent réglage.

Après l'étape 76, ou directement après l'étape 72 si le jeu 40 de conditions n'est pas satisfait, une étape 80 de détection d'une phase statique du véhicule 2 à partir des mesures de l'unité 10 est exécutée par le module 36. Lors de cette étape, le module 36 vérifie si le jeu 41 de conditions est satisfait. Dans l'affirmative, le procédé se poursuit par l'étape 64. A l'inverse, si le jeu 41 de conditions n'est pas satisfait, le procédé se poursuit par l'étape 66.

Dans ce mode de réalisation, le jeu 41 de conditions comporte seulement les conditions suivantes :

- condition (41.1) : $\sigma_v(k) < S_{41.1}$, et
- condition (41.2) : $|\mu_v(k)| < S_{41.2}$,

où $S_{41.1}$ et $S_{41.2}$ sont des seuils, par exemple, constants.

Par exemple, les seuils $S_{41.1}$ et $S_{41.2}$ sont supérieurs à 0,03 m/s ou à 0,05m/s et généralement inférieurs à 0,5 m/s ou 0,3 m/s. Ici, les seuils $S_{41.1}$ et $S_{41.2}$ sont tous les deux égaux à 0,1 m/s.

En parallèle des étapes précédentes, lors d'une étape 82, le calculateur 20 vérifie si une phase statique est signalée par le module 36. Par exemple, pour cela, le calculateur 20 vérifie que la valeur de la variable StaticFlag est égale à un. Si la variable StaticFlag est égale à un, lors d'une étape 84, le calculateur initialise un ou plusieurs paramètres du véhicule 2 qui, de préférence, doivent être initialisés lors d'une phase statique du véhicule 2. Pour cela, lors de l'étape 84, le calculateur exécute un ou plusieurs processus d'initialisation comme, par exemple, les processus ZVU et/ou ZARU.

Le procédé de la figure 2 est plus fiable que les procédés connus. Toutefois, il a pu être observé que dans certaines conditions très particulières, une phase statique est signalée par le module 36 alors que le véhicule 2 n'est pas immobile. Il a été découvert que ce problème se produit lorsque la phase statique du véhicule 2 est très courte, c'est-à-dire par exemple inférieure à cinq secondes. Dans ce cas, la valeur de l'indicateur $\mu_v$ descend en dessous du seuil $S_{40.1}$ juste avant la fin de la phase statique et ne repasse au-dessus de ce seuil qu'une ou deux secondes plus tard. Dans ce cas, le module 36 détecte une phase statique alors que celle-ci est déjà terminée. Cela provoque une mise à jour des seuils du jeu 39 alors que le véhicule 2 redémarre et n'est pas immobile. Les seuils du jeu 39 ainsi mis à jour sont alors substantiellement augmentés. Plus tard, lorsque la qualité des signaux satellitaires est mauvaise, ces seuils du jeu 39 substantiellement augmentés provoquent de fausses détections d'une phase statique du véhicule lors de l'exécution de l'étape 62.

Le procédé de la figure 3 remédie à cet inconvénient.

La figure 3 représente un autre procédé d'identification d'une phase statique du véhicule 2 susceptible d'être mis en oeuvre par le module 36 du système 6 à la place du procédé de la figure 2. Le procédé de la figure 3 est identique au procédé de la figure 2, sauf que :

- l'étape 70 est omise, et

- les étapes 74 à 76 sont remplacées par des étapes 90, 92, 94, 96, 100, 102, 104 et 106.

De plus, lors de l'étape 52, les indicateurs $\sigma_v$ et $\mu_v$ sont calculés à partir des mesures acquises pendant une fenêtre glissante très courte. Une fenêtre glissante très courte est une fenêtre dont la durée $D_G$ est inférieure à 0,5 seconde ou à 0,3 seconde. La durée $D_G$ reste cependant généralement supérieure à 0,05 seconde ou à 0,1 seconde. Ici, la durée $D_G$ de la fenêtre glissante utilisée pour calculer les indicateurs $\mu_v$ et $\sigma_v$ est égale à 0,2 seconde. La durée des fenêtres glissantes utilisé pour calculer les autres indicateurs reste, par exemple, inchangée.

Dans le cadre du procédé de la figure 3, le jeu 40 de conditions est remplacé par deux jeux différents 40a et 40w de conditions. Plus précisément, le jeu 40a comporte, en plus des conditions (40.1) et (40.2) précédemment décrites, une condition supplémentaire appelée par la suite « condition (40.3) ». Le jeu 40w comporte, en plus des conditions (40.1) et (40.2), une condition supplémentaire appelée par la suite « condition (40.4) ». Par contre, les jeux 38, 39 et 41 de conditions sont, par exemple, identiques à ceux décrits en référence à la figure 2.

De plus, dans ce mode de réalisation, les seuils $S_{40.1}$ et $S_{40.2}$ ne sont pas mis à jour et sont constants.

Les étapes 90 et 100 sont des étapes d'incrémentation, respectivement, des seuils $S_{40.3}$ et $S_{40.4}$ utilisés, respectivement, dans les conditions (40.3) et (40.4). Par exemple, ici, lors de l'étape 90, le seuil $S_{40.3}$ est incrémenté en mettant en oeuvre la relation suivante : $S_{40.3} = (1 + F_{40.3} \times D_I) \times S_{40.3\text{-last}}$, où :

- $F_{40.3}$ est une constante positive prédéterminée, et
- $S_{40.3\text{-last}}$ est la valeur du seuil $S_{40.3}$ obtenue à l'issue de la précédente exécution d'une étape 96 décrite plus loin.

De façon similaire, lors de l'étape 100, le seuil $S_{40.4}$ est incrémenté en mettant en oeuvre la relation suivante : $S_{40.4} = (1 + F_{40.4} \times D_I) \times S_{40.4\text{-last}}$, où :

- $F_{40.4}$ est une constante positive prédéterminée, et
- $S_{40.4\text{-last}}$ est la valeur du seuil $S_{40.4}$ obtenue à l'issue de la précédente exécution d'une étape 106 décrite plus loin.

Les constantes $F_{40.3}$ et $F_{40.4}$ sont très petites. Par exemple, elles sont égales aux constantes $F_{40.1}$ et $F_{40.2}$ précédemment décrites.

Les étapes 92 et 102 sont des étapes de vérification si les conditions, respectivement, (40.3) et (40.4) sont satisfaites. Dans ce mode de réalisation, la condition (40.3) est la suivante : $\mu_a(k) < S_{40.3}$. La condition (40.4) est la condition suivante : $\mu_w(k) < S_{40.4}$.

Si la condition (40.3) est satisfaite, l'étape 94 de calibration du seuil $S_{39.1}$ et l'étape 96 de décrémentation du seuil $S_{40.3}$ sont exécutées. Dans le cas contraire, ces étapes 94 et 96 ne sont pas exécutées.

Si la condition (40.4) est satisfaite, l'étape 104 de calibration des seuils $S_{39.2}$ et $S_{39.3}$ et l'étape 106 de décrémentation du seuil $S_{40.4}$ sont exécutées. Dans le cas contraire, ces étapes 104 et 106 ne sont pas exécutées.

Lors des étapes 94 et 104, les seuils $S_{39.1}$, $S_{39.2}$ et $S_{39.3}$ sont calibrés en fonction, respectivement, des valeurs $\sigma_a(k)$, $\sigma_w(k)$ et $\mu_w(k)$. Par exemple, ici, lors de l'étape 94, le seuil $S_{39.1}$ est mis à jour comme décrit dans le cas de l'étape 74. Par contre, lors de l'étape 94, les seuils $S_{39.2}$ et $S_{39.4}$ ne sont pas modifiés.

De façon similaire, lors de l'étape 104, les seuils $S_{39.2}$ et $S_{39.3}$ sont mis à jour comme décrit dans le cas de l'étape 74. Par contre, lors de l'étape 104, le seuil $S_{39.1}$ n'est pas modifié.

Lors de l'étape 96, le seuil $S_{40.3}$ est décrémenté. Ici, il est décrémenté en utilisant la même stratégie que celle utilisée pour décrémenter les seuils $S_{40.1}$ et $S_{40.2}$ lors de l'exécution de l'étape 76. Ainsi, lors de l'exécution de l'étape 96, le seuil $S_{40.3}$ est décrémenté en mettant en oeuvre la relation suivante : $S_{40.3} = \mu_a(k)$.

L'étape 106 est identique à l'étape 96 sauf que c'est le seuil $S_{40.4}$ qui est décrémenté. Pour cela, la relation suivante est mise en oeuvre : $S_{40.4} = \mu_w(k)$.

Dans ce mode de réalisation, la calibration du seuil $S_{39.1}$ est exécutée uniquement si le jeu 40a est satisfait et cela indépendamment du fait que le jeu 40w soit satisfait ou non. De façon similaire, la calibration des seuils $S_{39.2}$ et $S_{39.3}$ est exécutée uniquement si le jeu 40w est satisfait et cela indépendamment du fait que le jeu 40a soit satisfait ou non. Ainsi, dans ce mode de réalisation, la calibration du seuil $S_{39.1}$ et la calibration des seuils $S_{39.2}$, $S_{39.3}$ sont déclenchés indépendamment l'une de l'autre.

Il a été observé que l'utilisation des conditions (40.3) et (40.4) permet d'éviter le déclenchement d'une mise à jour des seuils du jeu 39 même après une très courte phase statique du véhicule. Ainsi, ce procédé limite l'inconvénient susceptible d'être rencontré avec le procédé de la figure 2.

Chapitre II : variantes

Variantes des jeux de conditions :

Le jeu 38 de conditions peut comporter d'autres conditions en plus ou à la place des conditions précédemment décrites. Des exemples d'autres conditions sont les suivants :

- condition (38.3) : le rapport signal sur bruit des signaux satellitaires reçus est supérieur à un seuil $S_{38.3}$,
- condition (38.4) : la position du véhicule 2 est située à l'intérieur d'une zone prédéterminée d'une carte où les signaux satellitaires reçus sont de bonne qualité.

Pour mettre en oeuvre la condition (38.4), le module 36 comporte une carte de la surface terrestre répertoriant des zones où la réception des signaux satellitaires est de bonne qualité. Par exemple, cette carte comporte des zones qui excluent les tunnels. En effet, lorsque le véhicule 2 se trouve à l'intérieur d'un tunnel, la réception des signaux satellitaires est mauvaise. Pour savoir si le véhicule 2 se trouve à l'intérieur de l'une de ces zones, le module 36 utilise la position du véhicule 2 déterminée par le module 26.

Le jeu 39 de conditions peut comporter d'autres conditions, en plus ou à la place des conditions précédemment décrites. Par exemple, une autre condition possible est la condition suivante:

- condition (39.4) : $\mu_a(k) < S_{39.4}$,

où $\mu_a(k)$ est la valeur, à l'instant k, de l'indicateur $\mu_a$ représentatif de la moyenne de l'accélération du véhicule 2 mesurée par l'accéléromètre 14 et compensée pour éliminer de cette mesure l'accélération due à la gravité terrestre. Pour cela, la gravité terrestre à l'emplacement où se trouve le véhicule 2 est par exemple obtenue à partir de la position du véhicule 2 et d'une cartographie ou d'un modèle de la gravité terrestre qui permet d'associer à chaque position possible du véhicule 2 la gravité terrestre qui s'exerce à cet emplacement.

Un autre exemple d'une condition possible pour le jeu 39 est le suivant :

- condition (39.5) : $\sigma_B(k) < S_{39.5}$, où $\sigma_B(k)$ est la valeur, à l'instant k, de l'indicateur $\sigma_B$ représentatif de l'écart-type des mesures du magnétomètre 30.

Le jeu 40 de conditions peut lui aussi être modifié. Par exemple, en variante, la condition (40.1) ou la condition (40.2) est omise.

Les conditions (40.1) et (40.2) des jeux 40a et 40w peuvent être omises dans le mode de réalisation de la figure 3. Dans ce cas, l'étape 72 est aussi omise.

Le jeu 41 de conditions peut comporter des conditions supplémentaires en plus de la condition (41.1) ou (41.2). Par exemple, le jeu 41 peut comporter en plus une ou plusieurs des conditions suivantes :

- condition (41.3) : $\sigma_a(k) < S_{41.3}$,
- condition (41.4) : $\sigma_w(k) < S_{41.4}$,
- condition (41.5) : $\mu_w(k) < S_{41.5}$,
- condition (41.6) : $\sigma_B(k) < S_{41.6}$,

où $S_{41.3}$ à $S_{41.6}$ sont des seuils prédéterminés, par exemple, constants.

La condition (41.1) du jeu 41 peut être omise.

Dans une autre variante, un jeu de conditions est considéré comme étant satisfait dès qu'au moins une des conditions de ce jeu de conditions est satisfaite.

Variantes du procédé :

En variante, l'étape 70 ou les étapes 90 et 100 sont exécutées uniquement pendant les phases statiques pour augmenter les seuils qui déclenchent l'étape de calibration. Par exemple, ces étapes 70, 90 ou 100 sont exécutées uniquement si la variable StaticFlag est égale à un.

En variante, l'incrémentation des seuils lors de l'exécution des étapes 70, 90 ou 100 est réalisée différemment. Par exemple, dès qu'une absence d'une phase statique est signalée, ces seuils sont incrémentés une fois d'un pas prédéterminé indépendant de la durée D, écoulée depuis la dernière exécution de l'étape de calibration. Ensuite, ces seuils restent constants jusqu'à la fin de l'exécution d'une prochaine étape de calibration.

Dans un autre mode de réalisation, les étapes 70, 90 et 100 d'incrémentation des seuils du jeu 40 sont omises.

Dans ce cas, les seuils du jeu 40 ne sont pas incrémentés.

Lors des étapes 74, 94 et 104, d'autres relations peuvent être utilisées pour mettre à jour les seuils du jeu 39 en fonction des caractéristiques mesurées du bruit sur les mesures de l'accéléromètre, du gyromètre et du magnétomètre. Par exemple, la relation $S_{39.1} = \sigma_a(k) \times F_{39.1}$ peut être remplacée par la relation suivante $S_{39.1} = \sigma_a(k) + F_{39.1}$. Cet exemple peut être transposé sans difficulté aux autres relations utilisées pour mettre à jour les seuils du jeu 39.

Dans un mode de réalisation simplifié, les étapes 74, 94 et/ou 104 de calibration des seuils du jeu 39 sont omises. Dans ce cas, par exemple, ces seuils sont des constantes. Dans ce cas, les étapes 70, 72, 76, 90, 92, 96, 100, 102 et 106 sont omises. Dans une autre variante possible, seule une partie des seuils du jeu 39 sont calibrés. Dans ce dernier cas, l'autre partie de ces seuils est, par exemple, constante. Par exemple, seule l'une des étapes 94 et 104 est omise.

Les étapes 76, 96 et 106 de décrémentation des seuils des jeux 40, 40a et 40w peuvent être réalisées différemment. Par exemple, en variante, à chaque fois que l'étape de calibration est exécutée, ces seuils sont décrémentés d'un pas constant indépendant des valeurs $I_G(k)$. Comme illustré dans le cas du procédé de la figure 3, seule une partie des seuils des jeux 40a et 40w peut être décrémentée tandis que les seuils de l'autre partie sont constants.

Dans une variante simplifiée, les étapes 76, 96 ou 106 sont omises. Ainsi, dans cette variante, les seuils des jeux 40, 40a et 40w ne sont pas décrémentés après l'exécution de l'étape de calibration.

Lors de l'étape 84, d'autres processus d'initialisation peuvent être exécutés, en plus ou à la place des processus ZVU et ZARU. En particulier, le processus d'initialisation exécuté lors de l'étape 84 peut être un processus d'initialisation d'autres paramètres du véhicule 2 que ceux utilisés par le système 6. Par exemple, l'information selon laquelle le véhicule 2 est statique peut être utilisée par un autre calculateur du véhicule 2 que le calculateur 20 pour déclencher l'initialisation de paramètres d'autres capteurs que les paramètres des capteurs du système 6.

Autres variantes :

Quelle que soit la grandeur physique G, d'autres indicateurs $I_G$, différents d'une moyenne ou d'un écart-type, sont possibles. Par exemple, un indicateur $I_G$ représentatif de la mesure de la grandeur physique G est la valeur instantanée maximale observée pendant la fenêtre glissante W. Ainsi, en variante, l'indicateur $\mu_v$ est remplacé par un indicateur $Max_v$ qui est égal à la vitesse instantanée maximale observée pendant la fenêtre glissante W.

L'indicateur $I_G$ peut aussi être une valeur instantanée de la mesure de la grandeur physique G.

Dans un autre mode de réalisation, au lieu d'utiliser directement l'écart-type en tant qu'information représentative de l'écart-type, c'est la variance des mesures de la grandeur physique G qui est utilisée. La valeur d'un indicateur $\sigma_G$ représentatif de l'écart-type des mesures de la grandeur physique G peut aussi être calculée à l'aide de la relation suivante :

$$\sigma_G(k) = \sum_{i=k-N}^{i=k} \left| G(i) - G(i-1) \right|$$

où :

- N est un nombre entier supérieur ou égal à deux et, de préférence, supérieur ou égal à cinq ou dix ou vingt, et
- G(i) est la valeur mesurée de la grandeur physique G à l'instant i.

D'autres méthodes sont possibles pour comparer un indicateur $I_G$, se présentant sous la forme d'un vecteur, à un seuil prédéterminé $S_G$. Ainsi, selon une autre méthode, c'est une norme de ce vecteur, par exemple la norme euclidienne, qui est comparée au seuil $S_G$.

Le système 6 décrit ici peut être utilisé dans d'autres véhicules comme des véhicules capables de se déplacer sur la mer ou dans les airs. Ainsi, le véhicule peut aussi être un train, un bateau, un sous-marin ou un avion. De façon générale, on désigne ici par "véhicule" tout objet susceptible de se déplacer et équipé d'un système 6 fixé sur cet objet pour déterminer sa position et son orientation. Par exemple, le véhicule peut être un missile, une fusée, un smartphone, un ordinateur portable ou similaire.

Le système 6 peut comporter des capteurs supplémentaires pour améliorer encore plus la précision avec laquelle la position et l'orientation du véhicule sont déterminées. Par exemple, le système 6 peut comporter :

- un capteur de pression afin d'améliorer la détermination de l'altitude du véhicule, et/ou
- un odomètre, tel qu'un podomètre, qui mesure la distance parcourue par le véhicule 2 entre deux instants successifs.

Des indicateurs supplémentaires $I_G$ calculés à partir des mesures de ces capteurs supplémentaires peuvent alors être utilisés dans des conditions d'un ou plusieurs des jeux de conditions 38 à 41.

De nombreux modes de réalisation du module 26 sont possibles. Par exemple, d'autres exemples d'architecture possibles pour le module 26 sont décrits dans le chapitre 4 de Godha2006.

Chapitre III : Avantages des modes de réalisation décrits

Lorsque la qualité des signaux satellitaires reçus est bonne, le fait d'utiliser les mesures de l'unité 10 pour détecter une phase statique du véhicule permet de détecter de façon plus fiable cette phase statique que si seules les mesures de l'unité 12 étaient utilisées. En effet, contrairement à tous les autres capteurs, l'unité 10 mesure directement la vitesse du véhicule de sorte qu'une valeur nulle ou très faible de la vitesse mesurée par l'unité 10 identifie sans ambiguïté une phase statique. A l'inverse, une valeur nulle ou très faible de la grandeur G mesurée par les autres capteurs ne signifie pas nécessairement que le véhicule est immobile. Par exemple, des valeurs nulles de l'accélération et de la vitesse angulaire peuvent se produire alors que le véhicule se déplace en ligne droite à vitesse constante. De même, un champ magnétique constant peut être observé alors que le véhicule se déplace. De plus, généralement, l'écart-type sur les mesures de l'unité 10, lorsque la qualité des signaux satellitaires est bonne, est inférieur à l'écart-type sur les mesures d'autres capteurs comme un accéléromètre, un gyromètre ou un magnétomètre. Ainsi, pendant les intervalles de temps où la qualité des signaux satellitaires est bonne, l'utilisation des mesures de l'unité 10 permet de détecter de façon plus fiable les phases statiques que dans le cas des procédés connus comme celui divulgué dans la demande US5991692A.

Le fait de calibrer les seuils du jeu 39 pendant une phase statique détectée à partir des mesures de l'unité 10 permet de régler plus précisément ces seuils. En effet, cette phase statique a été détectée à partir des mesures de l'unité 10 qui permettent de détecter l'immobilité du véhicule 2 de façon très fiable. Le risque de calibrer les seuils du jeu 39 alors que le véhicule 2 se déplace est donc réduit. De plus, une telle calibration de ces seuils du jeu 39 alors que le véhicule 2 est immobile permet de les régler en prenant en compte notamment les vibrations du véhicule à l'arrêt et donc d'obtenir un réglage plus précis de ces seuils. Un réglage plus précis de ces seuils se traduit ensuite par une détection plus fiable des phases statiques lorsque la qualité des signaux satellitaires reçus est mauvaise.

Le fait de décrémenter les seuils du jeu 40 au cours de la phase statique détectée permet de limiter le nombre de fois où l'étape de calibration est exécutée. Cela permet aussi de faire converger les seuils du jeu 40 vers des valeurs minimales et donc de déclencher l'étape de calibration au moment où la situation est la plus favorable pour réaliser la calibration des seuils du jeu 39. Ensuite, les seuils du jeu 39 ainsi calibrés ne sont plus modifiés tant qu'une situation encore plus favorable ne se présente pas. Cela permet d'améliorer la calibration des seuils du jeu 39 et donc d'augmenter la fiabilité du procédé d'identification de phases statiques.

Le fait de déclencher la calibration des seuils du jeu 39 uniquement lorsque la vitesse du véhicule 2 est inférieure à un seuil prédéterminé, permet de minimiser encore plus le risque que l'étape de calibration soit exécutée alors que le véhicule 2 se déplace. Cela accroît donc la fiabilité du procédé d'identification de phases statiques.

Le fait d'utiliser, pour déclencher l'étape de calibration, une condition sur la mesure ou l'écart-type des mesures de l'accéléromètre ou du gyromètre ou du magnétomètre permet de limiter le risque qu'une étape de calibration soit exécutée en dehors d'une phase statique du véhicule.

Le fait d'incrémenter les seuils du jeu 40 en absence de phase statique du véhicule 2 permet de déclencher plus fréquemment l'étape de calibration des seuils du jeu 39. Cela permet donc d'adapter automatiquement ces seuils à la situation actuelle dans laquelle le véhicule évolue.

Le fait d'utiliser l'indicateur $\sigma_V$ obtenu à partir des mesures de l'unité 10 permet de détecter simplement et efficacement la qualité des signaux satellitaires reçus par l'unité 10.

Le fait d'utiliser un indicateur représentatif de l'écart-type de l'accélération du véhicule 2, de la vitesse angulaire du véhicule 2 ou du champ magnétique mesuré par le magnétomètre permet de détecter de façon efficace une phase statique même lorsque les signaux satellitaires reçus sont de mauvaise qualité.

**Revendications**

1. Procédé d'identification d'une phase statique d'un véhicule lors de laquelle le véhicule est immobile dans un repère solidaire de la terre, ce procédé comportant :

   - la vérification (60), de façon répétée, qu'un premier jeu (38) d'une ou plusieurs conditions est satisfait, la qualité des signaux satellitaires reçus par une unité de géolocalisation étant considérée comme bonne uniquement lorsque ce premier jeu de conditions est satisfait, puis
   - l'exécution d'une première étape (62) de détection de la phase statique sans utiliser de mesures de l'unité de géolocalisation par satellites ou l'exécution d'une seconde étape (80) de détection de la phase statique à partir des mesures de l'unité de géolocalisation par satellites,

dans lequel :

- la première étape de détection comporte :

   - la vérification qu'un deuxième jeu (39) d'une ou plusieurs conditions est satisfait, ce deuxième jeu (39) de conditions comportant au moins une condition sur des mesures réalisées par une unité de mesure inertielle embarquée dans le véhicule ou par un magnétomètre embarqué dans le véhicule et,
   - lorsque le deuxième jeu (39) de conditions est satisfait, le déclenchement du signalement (64) d'une phase statique et,
   - à l'inverse, lorsque le deuxième jeu de conditions n'est pas satisfait, le déclenchement du signalement (66) de l'absence d'une phase statique,

- la seconde étape de détection comporte la vérification qu'un troisième jeu (41) d'une ou plusieurs conditions est satisfait, et lorsque le troisième jeu de conditions est satisfait, le déclenchement du signalement (64) d'une phase statique et, à l'inverse, lorsque le troisième jeu de conditions n'est pas satisfait, le déclenchement du signalement (66) de l'absence d'une phase statique, ce troisième jeu de conditions comportant la condition suivante : $Iv(k) < S_{vs}$, où :

   - $Iv(k)$ est la valeur, à un instant k, d'un indicateur représentatif de la vitesse du véhicule mesurée par l'unité de géolocalisation par satellites, et
   - $S_{vs}$ est un seuil prédéterminé, et

**caractérisé en ce que** :

- tant que le premier jeu (38) de conditions est satisfait, le procédé comporte seulement l'exécution de la seconde étape (80) de détection de la phase statique sans exécuter la première étape (62) de détection de la phase statique, et
- tant que le premier jeu (38) de conditions n'est pas satisfait, le procédé comporte seulement l'exécution de la première étape (62) de détection sans exécuter la seconde étape (80) de détection.

**2.** Procédé selon la revendication 1, dans lequel,

- le deuxième jeu (39) de conditions comporte la condition suivante : $I_{G1}(k) < S_{IG1}$, où

   - $I_{G1}(k)$ est la valeur, à un instant k, d'un indicateur $I_{G1}$ représentatif d'une mesure d'une première grandeur physique G1 ou d'un écart-type sur la mesure de cette première grandeur physique G1, la première grandeur physique G1 étant choisie dans le groupe constitué de l'accélération du véhicule mesurée par un accéléromètre de l'unité de mesure inertielle, de la vitesse angulaire du véhicule mesurée par un gyromètre de l'unité de mesure inertielle, et du champ magnétique terrestre mesuré par le magnétomètre, et
   - $S_{IG1}$ est un seuil prédéterminé,

- pendant une phase statique détectée par l'exécution de la seconde étape (80) de détection, le procédé comporte l'exécution d'une étape (74; 94, 104) de calibration du seuil $S_{IG1}$, cette étape de calibration comportant la mise à jour du seuil $S_{IG1}$ en fonction de la valeur $I_{G1}(k)$ de l'indicateur $I_{G1}$ à un instant k situé à l'intérieur de cette phase statique détectée.

**3.** Procédé selon la revendication 2, dans lequel, pendant une phase statique détectée par l'exécution de la seconde étape (80) de détection, le procédé comporte :

- la vérification (72; 92, 102) qu'un quatrième jeu (40) d'une ou plusieurs conditions est satisfait, et lorsque le quatrième jeu de conditions est satisfait, le déclenchement de l'exécution de l'étape (74; 94, 104) de calibration et, à l'inverse, lorsque le quatrième jeu de conditions n'est pas satisfait, le déclenchement de l'étape de calibration est inhibé, ce quatrième jeu de conditions comportant au moins la condition suivante : $I_{G4}(k) < S_{IG4}$, où :

   - $I_{G4}(k)$ est la valeur, à l'instant k, d'un indicateur $I_{G4}$ représentatif d'une mesure d'une deuxième grandeur physique G4 ou de l'écart-type sur la mesure de cette deuxième grandeur physique G4, la deuxième grandeur physique G4 étant choisie dans le groupe constitué de l'accélération du véhicule mesurée par l'accéléromètre de l'unité de mesure inertielle, de la vitesse angulaire du véhicule mesurée par le gyromètre de l'unité de mesure inertielle, et de la vitesse du véhicule obtenue à partir des mesures de l'unité de géolocalisation, et

- $S_{IG4}$ est un seuil prédéterminé.

4. Procédé selon la revendication 3, dans lequel après le déclenchement de l'exécution de l'étape de calibration, le seuil $S_{IG4}$ est décrémenté (76; 96, 106).

5. Procédé selon la revendication 4, dans lequel le seuil $S_{IG4}$ est décrémenté (76; 96, 106) en mettant en oeuvre la relation suivante $S_{IG4} = I_{G4-last}$, où $I_{G4-last}$ est la valeur de l'indicateur $I_{G4}$ qui a été comparée au seuil $S_{IG4}$ pour déclencher cette étape de calibration.

6. Procédé selon l'une quelconque des revendication 3 à 5, dans lequel, l'indicateur $I_{G4}$ est un indicateur représentatif de la mesure de la vitesse du véhicule par l'unité de géolocalisation par satellites et le seuil $S_{IG4}$ est inférieur ou égal au seuil $S_{vs}$.

7. Procédé selon l'une quelconque des revendications 2 à 6, dans lequel les indicateurs $I_{G1}$ et $I_{G4}$ sont tous les deux représentatifs de la mesure ou de l'écart-type sur la mesure de la même grandeur physique.

8. Procédé selon l'une quelconque des revendications 3 à 6, dans lequel, après le signalement de l'absence d'une phase statique et avant l'exécution de la prochaine étape de calibration, le seuil $S_{IG4}$ est incrémenté (70; 90, 100).

9. Procédé selon l'une quelconque des revendications précédentes, dans lequel le premier jeu (38) de conditions comporte la condition suivante : $\sigma_V(k) < S_{38.1}$, où

- $\sigma_V(k)$ est la valeur, à l'instant k, d'un indicateur $\sigma_V$ représentatif de l'écart-type sur la vitesse du véhicule mesurée par l'unité de géolocalisation par satellites, et
- $S_{38.1}$ est un seuil prédéterminé.

10. Procédé selon l'une quelconque des revendications 2 à 9, dans lequel l'indicateur $I_{G1}$ est un indicateur représentatif de l'écart-type sur la mesure de la première grandeur physique G1.

11. Support (24) d'enregistrement d'informations, lisible par un microprocesseur, **caractérisé en ce que** ce support comporte des instructions pour la réalisation d'un procédé conforme à l'une quelconque des revendications précédentes, lorsque ces instructions sont exécutées par le microprocesseur.

12. Module (36) d'identification d'une phase statique d'un véhicule lors de laquelle le véhicule est immobile dans un repère lié à la terre, ce module étant configuré pour

- vérifier, de façon répétée, qu'un premier jeu (38) d'une ou plusieurs conditions est satisfait, la qualité des signaux satellitaires reçus par l'unité de géolocalisation étant considérée comme bonne uniquement lorsque ce premier jeu de conditions est satisfait, puis
- exécuter une première étape de détection de la phase statique sans utiliser de mesures de l'unité de géolocalisation par satellites ou l'exécution d'une seconde étape (80) de détection de la phase statique à partir des mesures de l'unité de géolocalisation par satellites,

dans lequel :

- la première étape de détection comporte :

- la vérification qu'un deuxième jeu (39) d'une ou plusieurs conditions est satisfait, ce deuxième jeu (39) de conditions comportant au moins une condition sur des mesures réalisées par une unité de mesure inertielle embarquée dans le véhicule ou par un magnétomètre embarqué dans le véhicule et,
- lorsque le deuxième jeu (39) de conditions est satisfait, déclencher le signalement d'une phase statique et,
- à l'inverse, lorsque le deuxième jeu de conditions n'est pas satisfait, déclencher le signalement de l'absence d'une phase statique,

- la seconde étape de détection comporte la vérification qu'un troisième jeu (41) d'une ou plusieurs conditions est satisfait, et lorsque le troisième jeu de conditions est satisfait, déclencher le signalement (64) d'une phase statique et, à l'inverse, lorsque le troisième jeu de conditions n'est pas satisfait, déclencher le signalement (66) de l'absence d'une phase statique, ce troisième jeu de conditions comportant la condition suivante : $I_v(k) < S_{vs}$, où :

- Iv(k) est la valeur, à un instant k, d'un indicateur représentatif de la vitesse du véhicule mesurée par l'unité de géolocalisation par satellites, et
- $S_{vs}$ est un seuil prédéterminé, et

**caractérisé en ce que** le module (36) de détection est configuré pour :

- tant que le premier jeu (38) de conditions est satisfait, exécuter la seconde étape (80) de détection de la phase statique sans exécuter la première étape (62) de détection de la phase statique, et
- tant que le premier jeu (38) de conditions n'est pas satisfait, exécuter la première étape de détection sans exécuter la seconde étape de détection.

13. Système (6) de localisation, apte à être fixé sur un véhicule, pour déterminer la position et l'orientation de ce véhicule, ce système de localisation comportant :

- une unité (10) de géolocalisation par satellite,
- une unité (12) de mesure inertielle contenant un accéléromètre (14) et un gyromètre (16),

**caractérisé en ce qu'**il comporte un module (36) de détection conforme à la revendication 12.


**Patentansprüche**

1. Verfahren zur Erkennung einer statischen Phase eines Fahrzeugs, in der das Fahrzeug in einem fest mit der Erde verbundenen Bezugssystem unbeweglich ist, wobei dieses Verfahren aufweist:

- die wiederholte Überprüfung (60), ob ein erster Satz (38) von einer oder mehreren Bedingungen erfüllt ist, wobei die Qualität der von einer Geolokalisierungseinheit empfangenen Satellitensignale nur als gut beurteilt wird, wenn dieser erste Satz von Bedingungen erfüllt ist, dann
- die Ausführung eines ersten Schritts (62) der Erfassung der statischen Phase ohne Verwendung von Messungen der satellitengestützten Geolokalisierungseinheit oder die Ausführung eines zweiten Schritts (80) der Erfassung der statischen Phase ausgehend von den Messungen der satellitengestützten Geolokalisierungseinheit,
wobei:

- der erste Erfassungsschritt aufweist:

- die Überprüfung, ob ein zweiter Satz (39) von einer oder mehreren Bedingungen erfüllt ist, wobei dieser zweite Satz (39) von Bedingungen mindestens eine Bedingung bezüglich von Messungen aufweist, die von einer im Fahrzeug befindlichen Trägheitsmesseinheit oder von einem im Fahrzeug befindlichen Magnetometer ausgeführt werden, und
- wenn der zweite Satz (39) von Bedingungen erfüllt ist, das Auslösen der Signalisierung (64) einer statischen Phase, und
- umgekehrt, wenn der zweite Satz von Bedingungen nicht erfüllt ist, das Auslösen der Signalisierung (66) der Abwesenheit einer statischen Phase,

- der zweite Erfassungsschritt die Überprüfung, ob ein dritter Satz (41) von einer oder mehreren Bedingungen erfüllt ist, und wenn der dritte Satz von Bedingungen erfüllt ist, das Auslösen der Signalisierung (64) einer statischen Phase, und umgekehrt, wenn der dritte Satz von Bedingungen nicht erfüllt ist, das Auslösen der Signalisierung (66) der Abwesenheit einer statischen Phase aufweist, wobei dieser dritte Satz von Bedingungen die folgende Bedingung aufweist: $I_v(k) < S_{vs}$, wobei:

- $I_v(k)$ der Wert, zu einem Zeitpunkt k, eines für die von der satellitengestützten Geolokalisierungseinheit gemessene Geschwindigkeit des Fahrzeugs repräsentativen Indikators ist, und
- $S_{vs}$ eine vorbestimmte Schwelle ist, und

**dadurch gekennzeichnet, dass** :

- solange der erste Satz (38) von Bedingungen erfüllt ist, das Verfahren nur die Ausführung des zweiten Schritts (80) der Erfassung der statischen Phase ohne den ersten Schritt (62) der Erfassung der statischen Phase auszuführen aufweist, und
- solange der erste Satz (38) von Bedingungen nicht erfüllt ist, das Verfahren nur die Ausführung des ersten Erfassungsschritts (62) ohne den zweiten Erfassungsschritt (80) auszuführen aufweist.

2. Verfahren nach Anspruch 1, wobei

- der zweite Satz (39) von Bedingungen die folgende Bedingung aufweist : $I_{G1}(k) < S_{IG1}$, wobei

- $I_{G1}(k)$ der Wert, zu einem Zeitpunkt k, eines für eine Messung einer ersten physikalischen Größe G1 repräsentativen Indikators $I_{G1}$ oder einer Standardabweichung bezüglich der Messung dieser ersten physikalischen Größe G1 ist, wobei die erste physikalische Größe G1 aus der Gruppe ausgewählt wird, die aus der von einem Beschleunigungsmesser der Trägheitsmesseinheit gemessenen Beschleunigung des Fahrzeugs, der von einem Gyrometer der Trägheitsmesseinheit gemessenen Winkelgeschwindigkeit des Fahrzeugs und dem vom Magnetometer gemessenen Erdmagnetfeld besteht, und
- $S_{IG1}$ eine vorbestimmte Schwelle ist,

- das Verfahren während einer durch die Ausführung des zweiten Erfassungsschritts (80) erfassten statischen Phase die Ausführung eines Kalibrierungsschritts (74; 94, 104) der Schwelle $S_{IG1}$ aufweist, wobei dieser Kalibrierungsschritt die Aktualisierung der Schwelle $S_{IG1}$ abhängig vom Wert $I_{G1}(k)$ des Indikators $I_{G1}$ zu einem Zeitpunkt k aufweist, der sich innerhalb dieser erfassten statischen Phase befindet.

3. Verfahren nach Anspruch 2, wobei das Verfahren während einer durch die Ausführung des zweiten Erfassungsschritts (80) erfassten statische Phase aufweist:

- die Überprüfung (72; 92, 102), ob ein vierter Satz (40) von einer oder mehreren Bedingungen erfüllt ist, und wenn der vierte Satz von Bedingungen erfüllt ist, das Auslösen der Ausführung des Kalibrierungsschritts (74; 94, 104), und umgekehrt, wenn der vierte Satz von Bedingungen nicht erfüllt ist, das Verhindern der Auslösung des Kalibrierungsschritts, wobei dieser vierte Satz von Bedingungen mindestens die folgende Bedingung aufweist : $I_{G4}(k) < S_{IG4}$, wobei:

- $I_{G4}(K)$ der Wert, zum Zeitpunkt k, eines für eine Messung einer zweiten physikalischen Größe G4 oder die Standardabweichung bezüglich der Messung dieser zweiten physikalischen Größe G4 repräsentativen Indikators $I_{G4}$ ist, wobei die zweite physikalische Größe G4 aus der Gruppe ausgewählt wird, die aus der vom Beschleunigungsmesser der Trägheitsmesseinheit gemessenen Beschleunigung des Fahrzeugs, der vom Gyrometer der Trägheitsmesseinheit gemessenen Winkelgeschwindigkeit des Fahrzeugs und der ausgehend von den Messungen der Geolokalisierungseinheit erhaltenen Geschwindigkeit des Fahrzeugs besteht, und
- $S_{IG4}$ eine vorbestimmte Schwelle ist.

4. Verfahren nach Anspruch 3, wobei die Schwelle $S_{IG4}$ nach dem Auslösen der Ausführung des Kalibrierungsschritts dekrementiert wird (76; 96, 106).

5. Verfahren nach Anspruch 4, wobei die Schwelle $S_{IG4}$ dekrementiert wird (76; 96, 106), indem die folgende Beziehung $S_{IG4} = I_{G4-last}$ durchgeführt wird, wobei $I_{G4-last}$ der Wert des Indikators $I_{G4}$ ist, der mit der Schwelle $S_{IG4}$ verglichen wurde, um diesen Kalibrierungsschritt auszulösen.

6. Verfahren nach einem der Ansprüche 3 bis 5, wobei der Indikator $I_{G4}$ ein für die Messung der Geschwindigkeit des Fahrzeugs durch die satellitengestützte Geolokalisierungseinheit repräsentativer Indikator und die Schwelle $S_{IG4}$ niedriger als die oder gleich der Schwelle $S_{vs}$ ist.

7. Verfahren nach einem der Ansprüche 2 bis 6, wobei die Indikatoren $I_{G1}$ und $I_{G4}$ beide für die Messung oder die Standardabweichung bezüglich der Messung der gleichen physikalischen Größe repräsentativ sind.

8. Verfahren nach einem der Ansprüche 3 bis 6, wobei die Schwelle $S_{IG4}$ nach der Signalisierung der Abwesenheit einer statischen Phase und vor der Ausführung des nächsten Kalibrierungsschritts inkrementiert wird (70; 90, 100).

9. Verfahren nach einem der vorhergehenden Ansprüche, wobei der erste Satz (38) von Bedingungen die folgende Bedingung aufweist: $\sigma_v(k) < S_{38.1}$, wobei

   - $\sigma_v(k)$ der Wert, zum Zeitpunkt k, eines für die Standardabweichung bezüglich der von satellitengestützten Geolokalisierungseinheit gemessenen Geschwindigkeit des Fahrzeugs repräsentativen Indikators $\sigma_v$ ist, und
   - $S_{38.1}$ eine vorbestimmte Schwelle ist.

10. Verfahren nach einem der Ansprüche 2 bis 9, wobei der Indikator $I_{G1}$ ein für die Standardabweichung bezüglich der Messung der ersten physikalischen Größe G1 repräsentativer Indikator ist.

11. Informationsspeicherträger (24), für einen Mikroprozessor lesbar, **dadurch gekennzeichnet, dass** dieser Träger Anweisungen zur Durchführung eines Verfahrens gemäß einem der vorhergehenden Ansprüche aufweist, wenn diese Anweisungen vom Mikroprozessor ausgeführt werden.

12. Modul (36) zur Erkennung einer statischen Phase eines Fahrzeugs, in der das Fahrzeug in einem mit der Erde verbundenen Bezugssystem unbeweglich ist, wobei dieses Modul konfiguriert ist, um

   - wiederholt zu überprüfen, ob ein erster Satz (38) von einer oder mehreren Bedingungen erfüllt ist, wobei die Qualität der von der Geolokalisierungseinheit empfangenen Satellitensignale nur dann als gut beurteilt wird, wenn dieser erste Satz von Bedingungen erfüllt ist, dann
   - einen ersten Erfassungsschritt der statischen Phase ohne Verwendung von Messungen der satellitengestützten Geolokalisierungseinheit auszuführen oder die Ausführung eines zweiten Erfassungsschritts (80) der statischen Phase ausgehend von den Messungen der satellitengestützten Geolokalisierungseinheit, wobei:
   - der erste Erfassungsschritt aufweist:

     - die Überprüfung, ob ein zweiter Satz (39) von einer oder mehreren Bedingungen erfüllt ist, wobei dieser zweite Satz (39) von Bedingungen mindestens eine Bedingung bezüglich von Messungen aufweist, die von einer im Fahrzeug befindlichen Trägheitsmesseinheit oder von einem im Fahrzeug befindlichen Magnetometer ausgeführt werden, und
     - wenn der zweite Satz (39) von Bedingungen erfüllt ist, Auslösen der Signalisierung einer statischen Phase, und
     - umgekehrt, wenn der zweite Satz von Bedingungen nicht erfüllt ist, Auslösen der Signalisierung der Abwesenheit einer statischen Phase,

   - der zweite Erfassungsschritt die Überprüfung aufweist, ob ein dritter Satz (41) von einer oder mehreren Bedingungen erfüllt ist, und wenn der dritte Satz von Bedingungen erfüllt ist, die Signalisierung (64) einer statischen Phase auszulösen, und umgekehrt, wenn der dritte Satz von Bedingungen nicht erfüllt ist, die Signalisierung (66) der Abwesenheit einer statischen Phase auszulösen, wobei dieser Satz von Bedingungen die folgende Bedingung aufweist: $I_v(k) < S_{vs}$, wobei:

     - $I_v(k)$ der Wert, zu einem Zeitpunkt k, eines für die von der satellitengestützten Geolokalisierungseinheit gemessene Geschwindigkeit des Fahrzeugs repräsentativen Indikators ist, und
     - $S_{vs}$ eine vorbestimmte Schwelle ist, und

   **dadurch gekennzeichnet, dass** das Erfassungsmodul (36) konfiguriert ist, um :

     - solange der erste Satz (38) von Bedingungen erfüllt ist, den zweiten Schritt (80) der Erfassung der statischen Phase auszuführen, ohne den ersten Schritt (62) der Erfassung der statischen Phase auszuführen, und
     - solange der erste Satz (38) von Bedingungen nicht erfüllt ist, den ersten Erfassungsschritt auszuführen, ohne den zweiten Erfassungsschritt auszuführen.

13. Lokalisierungssystem (6), das an einem Fahrzeug befestigt werden kann, das fähig ist, die Position und die Orientierung dieses Fahrzeugs zu bestimmen, wobei dieses Lokalisierungssystem aufweist

- eine satellitengestützte Geolokalisierungseinheit (10),
- eine Trägheitsmesseinheit (12), die einen Beschleunigungsmesser (14) und ein Gyrometer (16) enthält,
**dadurch gekennzeichnet, dass** es ein Erfassungsmodul (36) gemäß Anspruch 12 aufweist.

**Claims**

1. Method for identifying a static phase of a vehicle in which the vehicle is immobile in a reference frame integral with the earth, this method comprising:

- checking (60), repeatedly, that a first set (38) of one or more conditions is satisfied, the quality of the satellite signals received by a geolocation unit being considered good only when this first set of conditions is satisfied, then
- executing a first step (62) of detecting the static phase without using measurements of the satellite geolocation unit or executing a second step (80) of detecting the static phase from the measurements of the satellite geolocation unit,
in which:

- the first detection step comprises:

- checking that a second set (39) of one or more conditions is satisfied, this second set (39) of conditions comprising at least one condition relating to measurements taken by an inertial measurement unit aboard the vehicle or by a magnetometer aboard the vehicle and,
- when the second set (39) of conditions is satisfied, triggering the signaling (64) of a static phase and,
- otherwise, when the second set of conditions is not satisfied, triggering the signaling (66) of the absence of a static phase,

- the second detection step comprises checking that a third set (41) of one or more conditions is satisfied, and, when the third set of conditions is satisfied, triggering the signaling (64) of a static phase and, otherwise, when the third set of conditions is not satisfied, triggering the signaling (66) of the absence of a static phase, this third set of conditions comprising the following condition: $Iv(k) < S_{vs}$, where:

- $Iv(k)$ is the value, at an instant k, of an indicator representing the velocity of the vehicle as measured by the satellite geolocation unit, and
- $S_{vs}$ is a predetermined threshold, and

**characterized in that**:
- so long as the first set (38) of conditions is satisfied, the method comprises only executing the second step (80) of detecting the static phase without executing the first step (62) of detecting the static phase, and
- so long as the first set (38) of conditions is not satisfied, the method comprises only executing the first detection step (62) without executing the second detection step (80).

2. Method according to Claim 1, in which

- the second set (39) of conditions comprises the following condition: $I_{G1}(k) < S_{IG1}$, where

- $I_{G1}(k)$ is the value, at an instant k, of an indicator $I_{G1}$ representing a measurement of a first physical quantity G1 or a standard deviation for the measurement of this first physical quantity G1, the first physical quantity G1 being chosen from the group comprising the acceleration of the vehicle as measured by an accelerometer of the inertial measurement unit, the angular velocity of the vehicle as measured by a gyrometer of the inertial measurement unit, and the earth's magnetic field measured by the magnetometer, and
- $S_{IG1}$ is a predetermined threshold,

- during a static phase detected by the execution of the second detection step (80), the method comprises executing a step (74; 94, 104) of calibrating the threshold $S_{IG1}$, this calibration step comprising updating the threshold $S_{IG1}$ on the basis of the value $I_{G1}(k)$ of the indicator $I_{G1}$ at an instant k situated within this detected static phase.

3. Method according to Claim 2, in which, during a static phase detected by the execution of the second detection step (80), the method comprises:

- checking (72; 92, 102) that a fourth set (40) of one or more conditions is satisfied, and, when the fourth set of conditions is satisfied, triggering the execution of the calibration step (74; 94, 104) and, otherwise, when the fourth set of conditions is not satisfied, the triggering of the calibration step is inhibited, this fourth set of conditions comprising at least the following condition: $I_{G4}(k) < S_{IG4}$, where:

- $I_{G4}(k)$ is the value, at the instant k, of an indicator $I_{G4}$ representing a measurement of a second physical quantity G4 or the standard deviation for the measurement of this second physical quantity G4, the second physical quantity G4 being chosen from the group comprising the acceleration of the vehicle as measured by the accelerometer of the inertial measurement unit, the angular velocity of the vehicle as measured by the gyrometer of the inertial measurement unit, and the velocity of the vehicle as obtained from the measurements of the geolocation unit, and
- $S_{IG4}$ is a predetermined threshold.

4. Method according to Claim 3, in which, after the triggering of the execution of the calibration step, the threshold $S_{IG4}$ is decremented (76; 96, 106).

5. Method according to Claim 4, in which the threshold $S_{IG4}$ is decremented (76; 96, 106) by implementing the following relationship $S_{IG4} = I_{G4\text{-last}}$, where $I_{G4\text{-last}}$ is the value of the indicator $I_{G4}$ that has been compared with the threshold $S_{IG4}$ in order to trigger this calibration step.

6. Method according to any one of Claims 3 to 5, in which the indicator $I_{G4}$ is an indicator representing the measurement of the velocity of the vehicle by the satellite geolocation unit and the threshold $S_{IG4}$ is less than or equal to the threshold $S_{vs}$.

7. Method according to any one of Claims 2 to 6, in which the indicators $I_{G1}$ and $I_{G4}$ both represent the measurement or the standard deviation for the measurement of the same physical quantity.

8. Method according to any one of Claims 3 to 6, in which, after the signaling of the absence of a static phase and before the execution of the next calibration step, the threshold $S_{IG4}$ is incremented (70; 90, 100).

9. Method according to any one of the preceding claims, in which the first set (38) of conditions comprises the following condition: $\sigma_v(k) < S_{38.1}$, where

- $\sigma_v(k)$ is the value, at the instant k, of an indicator $\sigma_v$ representing the standard deviation for the velocity of the vehicle as measured by the satellite geolocation unit, and
- $S_{38.1}$ is a predetermined threshold.

10. Method according to any one of Claims 2 to 9, in which the indicator $I_{G1}$ is an indicator representing the standard deviation for the measurement of the first physical quantity G1.

11. Information recording medium (24), readable by a microprocessor, **characterized in that** this medium comprises instructions for performing a method according to any one of the preceding claims when these instructions are executed by the microprocessor.

12. Module (36) for identifying a static phase of a vehicle in which the vehicle is immobile in a reference frame linked to the earth, this module being configured to:

- check, repeatedly, that a first set (38) of one or more conditions is satisfied, the quality of the satellite signals received by the geolocation unit being considered good only when this first set of conditions is satisfied, then
- execute a first step of detecting the static phase without using measurements of the satellite geolocation unit or executing a second step (80) of detecting the static phase from the measurements of the satellite geolocation unit,
in which:

- the first detection step comprises:

- checking that a second set (39) of one or more conditions is satisfied, this second set (39) of conditions comprising at least one condition relating to measurements taken by an inertial measurement unit aboard the vehicle or by a magnetometer aboard the vehicle and,
- when the second set (39) of conditions is satisfied, triggering the signaling of a static phase and,
- otherwise, when the second set of conditions is not satisfied, triggering the signaling of the absence of a static phase,

- the second detection step comprises checking that a third set (41) of one or more conditions is satisfied, and, when the third set of conditions is satisfied, triggering the signaling (64) of a static phase and, otherwise, when the third set of conditions is not satisfied, triggering the signaling (66) of the absence of a static phase, this third set of conditions comprising the following condition: $Iv(k) < S_{vs}$, where:

- $Iv(k)$ is the value, at an instant k, of an indicator representing the velocity of the vehicle as measured by the satellite geolocation unit, and
- $S_{vs}$ is a predetermined threshold, and

**characterized in that** the detection module (36) is configured to:
- so long as the first set (38) of conditions is satisfied, execute the second step (80) of detecting the static phase without executing the first step (62) of detecting the static phase, and
- so long as the first set (38) of conditions is not satisfied, execute the first detection step without executing the second detection step.

13. Locating system (6), capable of being fixed to a vehicle, for determining the position and orientation of this vehicle, this locating system comprising:

- a satellite geolocation unit (10),
- an inertial measurement unit (12) containing an accelerometer (14) and a gyrometer (16),
**characterized in that** it comprises a detection module (36) according to Claim 12.

Fig. 1

Fig. 2

Fig. 3

## EP 3 896 398 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5991692 A
- EP 0870175 A

- US 2008234933 A

**Littérature non-brevet citée dans la description**

- **S. GODHA.** Performance Evaluation of Low Cost MEMS-Based IMU Integrated With GPS for Land Vehicle Navigation Application. *PhD report,* 2006

- GNSS Technology and Applications. **PAUL D. GROVES.** Principles of GNSS, Inertial, and Multisensor Integrated Navigation Systems. Artech House, 2008